# EUROPEAN PATENT APPLICATION

(11) **EP 3 115 435 A1**
(43) Date of publication of application: **11.01.2017**
(21) Application number: 15425050.0
(22) Date of filing: 06.07.2015
(51) Int. Cl.: C09K 11/08

(54) **PHOTOLUMINESCENT-PHOTOREFRACTIVE MATERIAL FOR HIGH VISIBILITY**

(71) Applicant: Rivellini, Alex Ivano, 20081 Bernareggio (MB) (IT); Fontana, Eleonora Beatrice, 20127 Milano (MI) (IT); Rivellini, Carlo Mario, 20093 Cologno Monzese (MI) (IT)
(72) Inventor: Rivellini, Alex Ivano, 20081 Bernareggio (MB) (IT); Fontana, Eleonora Beatrice, 20127 Milano (MI) (IT); Rivellini, Carlo Mario, 20093 Cologno Monzese (MI) (IT)
(74) Representative: Padovano, Tommaso

(57) **Abstract**

The present invention is achieved in the physic-chemical composition of a material being at the same time photoluminescent and photorefractive realized in a set mixing percentage; the photoluminescent-photorefractive material achieved is a physic-chemical compound able to absorb light in the presence of direct and/or indirect incident light of the whole spectrum and then give it back according to the principle of photoluminescence, and simultaneously able to give back the light received during the lighting period, according to the principle of photorefringence.

These characteristics make the compound photoluminescent and photorefractive at the same time, imparting the substrate on which it is applied and/or of which it is made, characteristics of visibility both with or without the presence of light.

## Description

The present compound relates to the field of materials possessing both photoluminescent and photorefractive optical characteristics at a time, product class G02, bearing simultaneously the characteristics of the two fields of application present in the same material.

At present the industrial use of photoluminescence is employed independently from photorefringence, both used in the field of security and to make visualization of objects easier.

Existing applications that use the optical propertiy of photorefringence are, for instance, in the field of road signs, high-visibility clothing, the production of glittering dresses, for particularly sparkling fabric, etc.

Existing applications that use the optical property of photoluminescence are, for instance, in the field of safety exit signs on airplanes, in the production of fluorescent labels, in design.

There is no evidence of simultaneous applications having the characteristics described above.

The present photoluminescent-photorefractive material has been expressly conceived to solve the problem arising from those applications in which the photorefractive effect does not guarantee the visibility of the object unless it is hit by an incident light ray as well as the problem arising from those applications in which the photoluminescent effect does not guarantee the visibility of the object in case it is hit by an incident light ray, generally in the absence of light.

In fact, photorefringence is effective and makes the object visible only with the presence of incident light, whereas photoluminescence is set to zero in the presence of incident light; conversely, photoluminescence is effective and makes the object visible with no incident ray, while photorefrigence is not effective.

The purpose of the present invention is to solve both abovementioned shortcomings in order to make the object with characteristics of the invention always visible both in the presence of incident light and in the absence of light.

Appropriately, the compound can be applied to the surface of an object by means of deposition, bonding, painting, inking, application, mixing and participation.

Advantageously, the compound can be added in matrix, or on applicable materials, as well as in yarn, in the weft, in the warp, with adhesive or anyway applied within the object or on the desired object.

Particularly, the compound keeps the characteristics of the object on which it is applied or in which it participates, thereby allowing its use also with products that require such characteristics, such as fabrics, plastic materials, varnishes, paints, inks, glues, adhesives and stickers, paper, cardboard, flexible and foldable materials in general.

The compound can be used as additive and added, for instance, in matrix to injectable plastic materials thus imparting its own optical characteristics, for example using the compound as colouring pigment according to the process of injection of plastic materials in a 0,03 to 65% ratio of compound in the finished product, or mixed in paste for plastic materials in a 0,03 to 65% ratio of compound in the finished product; it can be added as additive to varnish or paint mixing the compound with varnish or paint itself in a 0,03 to 65% ratio of compound in the final product and then deposited with the varnish or the paint itself on the surfaces to be treated thus imparting its own optical characteristics; it can be used as additive to glues and/or adhesives, for example making paste for adhesives in a 0,03 to 65% ratio of compound in the finished product (glue plus colouring paste) and/or directly mixed with glues and/or adhesives in a 0,03 to 65% ratio of compound in the finished product.

The compound can be used as additive and inserted, for instance, in mortar and/or cement and/or similar materials in a 0,03 to 65% ratio of compound in the finished product, thus imparting to mortars and/or cement and/or similar materials its own characteristics; it can be used as pigment in inks and/or similar materials by adding to inks and/or similar materials in a 0,03 to 65% ratio of compound in the finished product.

The compound can be realised in the form of a layer e.g. for lamination with the possible addition of a binder, which allows the processing, in a 0,03 to 98% ratio of compound in the finished product.

The mixing of the compound with different materials can take place both through dry and wet mixing, respecting the percentages of the compound.

The compound can adhere to yarns, cloth, fabrics such as cotton, silk, wool, synthetic fabrics, or to sheets, blocks of different materials, such as paper, cardboard, cements, plastic materials e.g. applied on yarns of synthetic material and/or later used in the weft and/or in the warp for the production of fabrics that acquire the photoluminescent/photorefracting characteristics of the invention.

With respect to its characteristics, the invention has been realised by the composition of substances, of which at least one possessing photoluminescent characteristics, and a second one possessing photorefractive characteristics, in a 0,03% to 40% ratio of photoluminescent material/s: photorefractive material/s will therefore come out as balance to 100.

The compound is achieved by dry mixing or wet mixing of at least two components, of which the first one possessing photorefractive characteristics, for example in the form of microspheres with a diameter measurable between 10:110 microns, e.g. highly reflective glass microspheres, and the second one possessing the characteristics of photoluminescent powder with a grain size ranging from 1 to 130 micron, such as for example powders of rare-earth elements like strontium or europium aluminate or carbonate, zinc sulphide or similar.

In the case of wet mixing, it will be necessary to use non-polar solvents or weakly polar solvents such as for example acetone, dihydrocarbons or other.

The substances constituting the physic-chemical mixture will have characteristics related to DIN 67510 standard, thus providing said specifications of visibility to the compound in conditions of absence of light, as well as related to EN 1436, EN 1790, EN 471 standards and others rules governing the reflectivity of products, thus imparting such specifications of visibility to the invention.

On the basis of the above it can thus be seen that the compound realised as described above achieves the objective set that is to make an object visible also in conditions of absence of light or likewise to make it visible in the presence of incident light, thus making it always visible even in the absence of daylight.

## Claims

1. Compound possessing photoluminescent and photorefractive optical characteristics including:
- At least one substance possessing photoluminescent characteristics like, for example, powders of rare-earth elements such as strontium aluminate or strontium carbonate or europium or zinc sulphide or others, with a size ranging from 1 to 130 micron,
- At least a second one possessing photorefractive characteristics like, for example, highly reflective glass microspheres in the 10-110 micron range,
in which the combination occurs at a ratio ranging between 0,03% and 40% of the photoluminescent material compared with the total compound, for example through dry mixing or wet mixing;

2. compound according to claim 1, **characterized in that** said compound is added in matrix to another material like, for example, in the masterbatch of plastic materials as plastic dye, or as gel matrix, or as paste for plastic materials, in a 0,03 to 65% ratio of compound with respect to the finished product, thus imparting its own photoluminescent/photorefractive characteristics and visibility to it;

3. Use of the compound according to claim 1 and 2, **characterized in that** said compound is realised in the form of a layer e.g. for lamination with the possible addition of a binder, mixed in a 0,03 to 98% ratio of compound in the finished product, which can be added to another material, thus imparting its own photoluminescent/photorefractive characteristics and visibility to it;

4. Use of the compound according to claim 1 and 2, **characterized in that** said compound is mixed into varnish or paint in a 0,03 to 65% ratio of compound in the finished product, thus imparting its own photoluminescent/photorefractive characteristics and visibility to the varnish or the paint;

5. Use of the compound according to claim 1, **characterized in that** said compound is applied on yarn, or merged, included and/or dipped into another spinnable material, thus imparting its own photoluminescent/photorefractive characteristics and visibility to it;

6. Use of the compound according to claim 1 and 5, **characterized in that** said compound is inserted in the yarn, in the weft and/or in the warp of another material, thus imparting its own photoluminescent/photorefractive characteristics and visibility to it;

7. Use of the compound according to claim 1, **characterized in that** said compound is mixed with glue or adhesive in a 0,03 to 65% ratio of compound in the finished product, thus imparting its own photoluminescent/photorefractive characteristics and visibility to it;

8. Use of the compound according to claim 1, **characterized in that** said compound is mixed with mortar and/or cement and/or similar materials in a 0,03 to 65% ratio between the compound and the finished product, thus conferring its own photoluminescent/photorefractive characteristics and visibility to it;

9. Use of the compound according to claim 1, **characterized in that** said compound is mixed with inks and/or similar materials in a 0,03 to 65% ratio of the compound with respect to the finished product, thus imparting its own photoluminescent/photorefractive characteristics and visibility to it.
